# EUROPÄISCHE PATENTANMELDUNG

(11) **EP 2 078 703 A1**
(43) Veröffentlichungstag der Anmeldung: **15.07.2009**
(21) Anmeldenummer: 08019919.3
(22) Anmeldetag: 14.11.2008
(51) Int. Cl.: C02F 3/30, C02F 3/28

(54) **Verfahren zur Denitrifikation von Abwässern in einer Kläranlage**

(30) Priorität: 14.11.2007 EP 07022150
(71) Anmelder: Süd-Chemie AG, 80333 München (DE)
(72) Erfinder: Kulicke, Karin, 91315 Höchstadt (DE)
(74) Vertreter: Heinemann, Monica

(57) **Zusammenfassung**

Die Erfindung betrifft ein Verfahren zur Denitrifikation von Abwässern in einer Kläranlage, umfassend mindestens ein Vorklärbecken mit Zulauf, mindestens eine biologische Klärstufe und mindestens ein Nachklärbecken, wobei a) gegebenenfalls nitrifiziertes Abwasser; b) gegebenenfalls Biomasse oder Überschussschlamm aus der biologischen Klärstufe oder der Nachklärung; c) Schlammgemisch aus dem Vorklärbecken in das Vorklärbecken oder dessen Zulauf rückgeführt werden, und wobei ein Teil des Abwasserzulaufs vor dem Vorklärbecken abgezweigt und nach dem Vorklärbecken wieder zugeführt wird, und eine Kläranlage zur Durchführung des Verfahrens.

## Beschreibung

Die Erfindung betrifft ein Verfahren zur Denitrifikation von Abwässern in einer Kläranlage, umfassend mindestens ein Vorklärbecken mit Zulauf, mindestens eine biologische Klärstufe und mindestens ein Nachklärbecken mit Ablauf.

Solche Kläranlagen sind an sich im Stand der Technik bekannt. Dabei wird das Rohschlamm enthaltende Abwasser zunächst in ein Vorklärbecken geleitet, wobei dem Vorklärbecken üblicherweise eine Rechenanlage, eine Hebewerk und ein Sandfang vorgeschaltet sind. Im Vorklärbecken findet normalerweise nur eine mechanische Schlammabscheidung statt. Der sedimentierte Rohschlamm wird durch den Räumer in die Schlammtrichter des Vorklärbeckens befördert.

Aus dem Vorklärbecken fließt das Wasser zusammen mit dem nicht abgeschiedenen Teil des Rohschlamms in die biologische Klärstufe, die beispielsweise als Tropfkörper oder als Belebungsbecken ausgestaltet sein kann. Hierbei wird das Abwasser mit belebtem Schlamm in Kontakt gebracht und belüftet. Der zum biologischen Abbau erforderliche Sauerstoff wird im Falle des Belebungsbeckens mit Belüftungseinrichtung eingetragen, im Fall eines Tropfkörpers z.B. durch die Kaminwirkung. Das Abwasser wird durch die Mikroorganismen des belebten Schlammes gereinigt, wobei die organischen Stoffe des Abwassers aufgenommen und in verschiedenen Anteilen veratmet bzw. in absetzbare Biomasse übergeführt werden. Neben der Entfernung der Kohlenstoffverbindungen durch die im belebten Schlamm oder im Aufwuchs von Tropfkörpern vorhandenen Mikroorganismen wird durch die nitrifizierenden Mikroorganismen (Nitrifikanten) gezielt Ammoniumstickstoff zu Nitratstickstoff und anderen Stickstoffoxiden oxidiert.

Bei der Abwasserreinigung mit Denitrifikation wird zusätzlich Nitrat- und Nitritstickstoff zu gasförmigem Stickstoff reduziert, was im Stand der Technik entweder in der biologischen Klärstufe oder vorgeschaltet in einem besonderen Denitrifikationsbecken, das auch als Belebungsbecken betrieben werden kann, geschieht.

Von dem Belebungsbecken oder Tropfkörper(n) fließt das Abwasser-Schlamm-Gemisch in das Nachklärbecken, in welchem sich der belebte Schlamm bzw. der Überschußschlamm vom gereinigten Abwasser trennt. Der im Nachklärbecken abgesetzte Schlamm wird als Rücklaufschlamm in das Belebungsbecken zurückgeführt, während das gereinigte Abwasser in den Vorfluter abfließt.

Da sich der belebte Schlamm bei den biologischen Prozessen vermehrt, wird der Zuwachs als Überschussschlamm entfernt.

Nach einem herkömmlichen Verfahren gemäß Stand der Technik musste im Belebungsbecken ein Denitrifikationsbecken vorgeschaltet werden, in welchem das zufließende Abwasser, Rücklaufschlamm aus dem Nachklärbecken und nitrathaltiges Wasser aus dem Nachklärbecken ohne Sauerstoffeintrag miteinander vermischt wurden, so dass der belebte Schlamm bei anoxidischen Bedingungen mit einer Umwälzung ohne Sauerstoffeintrag in Schwebe gehalten werden musste. Voraussetzung für die vorgeschaltene Denitrifikation war, dass die Rückführung so bemessen war, dass ausreichend Nitratstickstoff zurückgeführt wurde. Wurde die vorgeschaltene Denitrifikation in einem Becken durchgeführt, so war der Einbau von Trennwänden zur Trennung des Belebungsbeckens vom aeroben Nitrifikationsanteil erforderlich.

Bei simultaner Denitrifikation gemäß Stand der Technik wechseln sauerstoffhaltige Zonen (Nitrifikation) und anoxische Zonen (Denitrifikation) räumlich ohne feste Trennung im Belebungsbecken ab, was eine Vergrößerung der Kapazität des Belebungsbeckens erforderlich machte. Belebungsbecken mit simultaner Denitrifikation wurden vielfach als Umlaufbecken ausgebildet. Die Sauerstoffzufuhr war hierbei dem Sauerstoffverbrauch anzupassen, damit entsprechend große sauerstoffhaltige und sauerstofffreie Zonen entstehen, um die angestrebte Nitrifikation bzw. Denitrifikation zu erreichen, was nur durch eine aufwendige Prozeßkontrolle möglich war.

Bei intermittierender Denitrifikation gemäß Stand der Technik wechseln Nitrifikation und Denitrifikation in einem einzigen Becken zeitlich ab. Bei alternierender Denitrifikation finden Denitrifikation und Nitrifikation in zwei Becken statt, die hierfür wechselweise betrieben werden. Eine Vergrößerung des Denitrifikationsanteils war nur auf höchstens 50 % möglich. Mit zunehmendem Volumen des anaeroben Denitrifikationsbeckens am ganzen Belebungsbecken musste daher das Schlammalter vergrößert werden.

Aus der EP 1 030 821 A ist ein Verfahren bekannt, bei dem das Vorklärbecken nicht nur zur mechanischen Vorklärung dient, sondern auch als denitrifizierende biologische Reinigungsstufe. Hierzu wird nitrifiziertes Abwasser aus dem Nachklärbecken bzw. dessen Zu- oder Ablauf, Überschussschlamm aus der biologischen Klärstufe, und Schlammgemisch aus dem Vorklärbecken in den Zulauf zum Vorklärbecken rückgeführt, um dort eine Denitrifikation zu ermöglichen.

Dabei wird ohne aufwändige bauliche Maßnahmen und entsprechend kostengünstig eine Doppelfunktion der Vorklärung als mechanische Reinigungsstufe und Denitrifikationsstufe ermöglicht.Der Räumer im Vorklärbecken erhält ebenfalls eine Doppelfunktion: zur Räumung des Schlammes in die Schlammtrichter im Vorklärbecken und zur Durchmischung der Schlamm- und Wasserströme.

Da die gesetzlichen Vorschriften zur Begrenzung des in den Vorfluter eingeleiteten Gesamt-Stickstoffgehalts des gereinigten Abwassers zunehmend verschärft werden und auch das Umweltbewusstsein entsprechend zunimmt, besteht dennoch ein großer Bedarf an verbesserten Abwasserreinigungsverfahren mit effizienter Denitrifikation, die kostengünstig und einfach zu steuern sind.

Eine Aufgabe der vorliegenden Erfindung war es daher, ein verbessertes Verfahren zur Denitrifikation von Abwässern bereitzustellen, das unter verschiedenen Betriebsbedingungen eine einfache und effiziente Abwasserreinigung, insbesondere Denitrifikation der Abwässer ermöglicht.

Nach einem ersten Aspekt der vorliegenden Erfindung wird diese Aufgabe durch das Verfahren gemäß Anspruch 1 gelöst. Bevorzugte Ausführungsformen sind in den Unteransprüchen angegeben.

So betrifft ein erster Gegenstand der vorliegenden Erfindung ein Verfahren zur Denitrifikation von Abwässern in einer Kläranlage, umfassend mindestens ein Vorklärbecken mit Zulauf, mindestens eine biologische Klärstufe und mindestens ein Nachklärbecken, wobei
a) gegebenenfalls nitrifiziertes Abwasser (Rückführung a))
b) gegebenenfalls Biomasse oder Schlamm, insbesondere Überschussschlamm aus der biologischen Klärstufe oder der Nachklärung (Rückführung b))
c) Schlammgemisch aus dem Vorklärbecken (Rückführung c)) in das Vorklärbecken oder dessen Zulauf rückgeführt werden, und wobei ein Teil des Abwasserzulaufs vor dem Vorklärbecken abgezweigt und nach dem Vorklärbecken vor oder direkt in die biologische Klärstufe wieder zugeführt wird.

Ähnlich wie die Erfindung gemäß der EP 1 030 821 B1 der gleichen Anmelderin beruht die vorliegende Erfindung auf dem Gedanken, eine Denitrifikation im Vorklärbecken durchführen zu können, das bisher nur die Funktion der mechanischen Schlammabscheidung und mechanischen Vorklärung hatte. Durch die erfindungsgemäßen Teilstromführungen wird dabei die Effizienz der Dentitrifikation überraschend gesteigert.

Das erfindungsgemäße Verfahren kann grundsätzlich auf jeder herkömmlichen Kläranlage durchgeführt werden, wobei in der Regel keine oder nur geringe bauliche Maßnahmen erforderlich sind. Vorzugsweise umfasst die Kläranlage mindestens ein Vorklärbecken, mindestens eine biologische Klärstufe, und mindestens ein Nachklärbecken. Unter Vorklärbecken wird hier vorzugsweise ein Vorklärbecken mit Räumer verstanden, das mindestens einen, insbesondere ein oder zwei, Schlammtrichter aufweist. Vorzugsweise ist keine Belüftungseinrichtung vorgesehen.

Zur Förderung der Denitrifikation im Vorklärbecken wird vorzugsweise nitrifiziertes Abwasser in das Vorklärbecken bzw. in dessen Zulauf geleitet. Erfindungsgemäß wird unter "nitrifiziertem Abwasser" jegliches Abwasser verstanden, das mindestens eine Form eines Stickstoffoxids enthält, wie es in der Denitrifikation zu elementarem Stickstoff umgesetzt werden kann. In der Regel wird es sich hierbei um nitrat- bzw. nitrithaltiges Abwasser handeln. Entsprechende Abwässer können nach einer bevorzugten Ausführungsform nach der biologischen Klärstufe bzw. aus der Nachklärung oder deren Zu- oder Ablauf entnommen werden. Grundsätzlich können jedoch auch andere Stickstoffoxid-haltige Abwasserströme bzw. -teilströme eingesetzt werden, z. B. Prozessabwässer oder industrielle Abwässer. Wichtig ist, dass das nitrifizierte bzw. Stickstoffoxid-haltige Abwasser Substrate für die mikrobielle Denitrifikation in der Vorklärung enthält. Vorzugsweise liegt der Gehalt des nitrifizierten Abwassers an Stickstoffoxiden, insbesondere an Nitrat und/oder Nitrit bei mindestens 1 mg/L, bevorzugt bei mindestens 5 mg/L, weiter bevorzugt bei mindestens 25 mg/L, weiter bevorzugt bei mindestens 50 mg/L. Die Rückführung von nitrifiziertem Abwasser in das Vorklärbecken kann nach einer bevorzugten erfindungsgemäßen Ausführungsform jedoch auch zeitweise oder dauerhaft nicht durchgeführt werden, insbesondere bei sehr hohem Abwasserzulauf zum Vorklärbecken (über den Trockenwetterzulauf hinaus).

Dabei wird unter Denitrifikation erfindungsgemäß die biologische bzw. mikrobiologische Stickstoffeliminierung aus Stickstoffoxiden, insbesondere von Nitrit und/oder Nitrat zu elementarem Stickstoff verstanden. Bei der Verwendung von nitrifiziertem Abwasser aus der Nachklärung bzw. deren Zu- oder Ablauf gemäß der EP 1 030 821 B1 werden dabei die Stickstoffoxide im nitrifizierten Abwasser durch die Wirkung nitrifizierender Mikroorganismen erzeugt, wie sie z. B. in der biologischen Klärstufe auftreten.

Weiterhin wird, entsprechend der EP 1 030 821 B1 Schlammgemisch aus dem Vorklärbecken in das Vorklärbecken bzw. dessen Zulauf rückgeführt. Dadurch wird das Schlammalter im Vorklärbecken erhöht, und die Bedingungen für eine effiziente Denitrifikation werden verbessert.

Nach einer bevorzugten Ausführungsform wird zusätzlich Biomasse oder Schlamm, insbesondere aus der biologischen Klärstufe oder Nachklärung in das Vorklärbecken bzw. dessen Zulauf geleitet. Nach einer bevorzugten Ausführungsform handelt es sich bei dem Schlamm um Überschussschlamm aus der biologischen Klärstufe oder der Nachklärung. Durch die Rück- bzw. Zuführung von Biomasse bzw. Schlamm kann in vorteilhafter Weise ein Animpfen bzw. eine Anreicherung von denitrifizierenden Organismen in der Vorklärung erfolgen. Allerdings ist nach einer erfindungsgemäßen Ausführungsform ein solches Animpfen nicht erforderlich, wenn genügend denitrifizierende Organismen bereits in dem Vorklärbecken vorhanden sind bzw. durch die Verfahrensführung angereichert wurden, die Animpfung anderweitig erfolgen kann, oder die denitrifizierenden Organismen durch den Abwasserzulauf zur Kläranlage in ausreichender Menge zugeführt werden.

Durch die Zuführung von Biomasse bzw. Schlamm, insbesondere Überschussschlamm aus der biologischen Klärstufe bzw. der Nachklärung kann nach einer bevorzugten Ausführungsform jedoch auch der Schlammspiegel und das Schlammalter im Vorklärbecken eingestellt werden, um die Bedingungen für die Denitrifikation zu optimieren. Hier kann auf die entsprechenden Ausführungen in der EP 1 030 821 A der gleichen Anmelderin zur Rückführung von Überschussschlamm in das Vorklärbecken verwiesen werden. Die dortigen Ausführungen werden ausdrücklich durch Inbezugnahme in die vorliegende Beschreibung aufgenommen.

Die Denitrifikation im Vorklärbecken wird nicht intermittierend in einem Betriebszyklus aus drei der Reihe nach stattfindenden Phasen (Belüften, Absetzen und Abziehen des Überstandswassers) betrieben. D.h. es finden vorzugsweise im Vorklärbecken keine unterschiedlichen Betriebsphasen der Reihe nach statt, sondern ein kontinuierlicher Betrieb (bei Normalbetrieb der Anlage) unter im wesentlichen gleichbleibenden Bedingungen.

Vorzugsweise findet keine Belüftungsphase statt. Weiter wird bevorzugt, dass ein kontinuierlicher Abwasserablauf erfolgt.

Erfindungswesentlich ist nun, dass ein Teil des Abwasserzulaufs vor dem Vorklärbecken abgezweigt und nach dem Vorklärbecken wieder zugeführt wird. So wurde gefunden, dass dadurch eine effizientere und gleichmäßigere Denitrifikation im Vorklärbecken sichergestellt werden kann. Durch die Umleitung eines Teils des Abwasserzulaufs um das Vorklärbecken herum vor bzw. direkt in die biologische Klärstufe können ein zu hoher Schlammaustrag, eine zu hohe Sauerstoffzufuhr und/oder eine zu hohe hydraulische Belastung des Vorklärbeckens, die jeweils für sich genommen oder in Kombination eine effiziente Denitrifikation beeinträchtigen können, vermieden werden. Nach einer erfindungsgemäßen Ausführungsform zeigt das Verfahren daher zusätzliche Vorteile, wenn der Abwasserzulauf variiert.

Dabei wird nach einer bevorzugten erfindungsgemäßen Ausführungsform der vor dem Vorklärbecken abgezweigte Teil des Abwasserzulaufs so bemessen, dass ein ständig konstanter Abwasserzulauf in das Vorklärbecken erfolgt. Vorzugsweise erfolgt bei der Umleitung eines Teils des Abwasserzulaufs um das Vorklärbecken herum keine Behandlung des Abwasserzulaufs, insbesondere keine Vorversäuerung.

Nach einer besonders bevorzugten Ausführungsform zeigen sich die überraschenden Vorteile der erfindungsgemäßen Umleitung eines Teils des Abwasserzulaufes um das Vorklärbecken herum und direkt in bzw. vor die biologische Klärstufe besonders stark, wenn der Abwasserzulauf erhöht ist, z. B. durch verstärkte Zuleitungen von Abwasser, erhöhte Nebenströme, durch Regenfall etc.

So werden nach einer besonders bevorzugten Ausführungsform zwischen 10 und 100 %, insbesondere 30 bis 100 % des über den Trockenwetterzulauf (Qₜ) hinausgehenden Abwasserzulaufs vor dem Vorklärbecken abgezweigt. Nach einer weiteren bevorzugten Ausführungsform liegt der dem Vorklärbecken zugeführte Teil des Abwasserzulaufs (d.h. der nicht vor dem Vorklärbecken abgezweigte Teil) zwischen dem Einfachen bis maximal dem Zweifachen des Trockenwetterzulaufs (Qₜ). Der darüber hinausgehende Teil eines erhöhten Abwasserzulaufes wird nach einer bevorzugten Ausführungsform vor dem Vorklärbecken abgezweigt. Dabei ist zu beachten, dass der Abwasserzulauf z. B. bei Regenereignis oder Tauwetter auf das bis zu 6-fache, häufig auch auf das bis zu 10-fache oder mehr des Trockenwetterzulaufs (Qₜ) erhöht sein kann.

Die Definition des durchschnittlichen Trockenwetterzulaufs in der Kläranlage ist dem Fachmann geläufig. Nach einer möglichen erfindungsgemäßen Ausführungsform wird unter dem durchschnittlichen Trockenwetterzulauf hier der Trockenwetterzulauf gemäß DIN EN 1085 verstanden, d.h. der Zufluss einer Kläranlage, der weder durch Regenereignisse noch durch Tauwetter beeinflusst wird. Sofern Fremdwasserzuläufe vorhanden sind, sollen diese nach einer bevorzugten Ausführungsform im Trockenwetterzulauf berücksichtigt sein.

Dabei wird erfindungsgemäß der Teil des Abwassers, der vor der Vorklärung abgezweigt wird, nicht um die biologische Klärstufe geführt und z. B. direkt in den Vorfluter eingeleitet, sondern wird so geführt, dass er anschließend in der biologischen Klärstufe gereinigt werden kann. Die Wiedereinleitung des vor dem Vorklärbecken abgezweigten Teilstroms erfolgt also schon vor der biologischen Klärstufe, oder direkt in die biologische Klärstufe.

Nach einer bevorzugten erfindungsgemäßen Ausführungsform erfolgt somit bei einem Abwasserzulauf der den Trockenwetterzulauf (Qₜ) nicht übersteigt, keine Abzweigung eines Teils des Abwasserzulaufs vor dem Vorklärbecken. Es erfolgt jedoch eine Rückführung an nitrifiziertem Abwasser, vorzugsweise so, dass der Gesamtzulauf zum Vorklärbecken bei etwa dem Doppelten, in Einzelfällen bis zu dem Vierfachen des Trockenwetterzulaufs liegt.

Sofern die Abwasserzulaufmenge über dem Trockenwetterzulauf (Qₜ) liegt, wird nach einer vorteilhaften erfindungsgemäßen Ausführungsform der den Trockenwetterzulauf übersteigende Anteil des Abwasserzulaufs komplett um das Vorklärbecken herum umgeleitet. Die Rückführung an nitrifiziertem Abwasser kann nach einer bevorzugten Ausführungsform dann unverändert bleiben.

Nach einer anderen vorteilhaften erfindungsgemäßen Ausführungsform wird der den Trockenwetterzulauf übersteigende Anteil des Abwasserzulaufs nur teilweise um das Vorklärbecken umgeleitet, d. h. ein gewisser Anteil davon wird direkt in das Vorklärbecken eingeleitet. Dann kann nach einer bevorzugten erfindungsgemäßen Ausführungsform aber die Rückführung an nitrifiziertem Abwasser entsprechend verringert werden, d. h. vorzugsweise um den Teil des erhöhten Abwasserzulaufs, der direkt in das Vorklärbecken geleitet wird.

Nach einer bevorzugten Ausführungsform ist die Summe des Abwasserzulaufs und der rückgeführten Menge an nitrifiziertem Abwasser insgesamt nicht höher als das Vierfache des Trockenwetterzulaufs, in vielen Fällen vorzugsweise nicht höher als das Dreifache des Trockenwetterzulaufs, in vielen Fällen weiter bevorzugt nicht höher als das Zweifache des Trockenwetterzulaufs.

Nach einer anderen vorteilhaften Ausführungsform ist es in vielen Fällen bevorzugt, wenn keine Rückführung von nitrifiziertem Abwasser mehr erfolgt, wenn der Abwasserzulauf zum Vorklärbecken das Vierfache, insbesondere das Dreifache, weiter bevorzugt das Zweifache des Trockenwetterzulaufs übersteigt.

Bei einer erfindungsgemäßen Ausführungsform wird als biologische Klärstufe (ein- oder zweistufig) ein Belebungsbecken verwendet. Es können jedoch auch anstelle oder zusammen mit dem (den) Belebungsbecken ein oder mehrere Tropfkörper verwendet werden. Bei einem Tropfkörper sind Mikroorganismen auf der Oberfläche eines festen Trägermaterials angesiedelt. Das zu reinigende Abwasser wird dann beispielsweise in einen Turm durch eine Schüttung des bewachsenen Trägermaterials geleitet.

In ähnlicher Weise kann die biologische Klärstufe einen Biofilter aufweisen, auf dem die Mikroorganismen angesiedelt sind. Weiterhin können in der biologischen Klärstufe spezielle Ausführungen der vorgenannten Systeme, wie Rotationstropfkörper, Scheibentauchkörper und dergleichen verwendet werden. Diese und weitere Ausführungsformen von biologischen Klärstufen sind dem Fachmann auf diesem Gebiet geläufig.

So können auch sogenannte SBR-Reaktoren verwendet werden, die gleichzeitig die Funktion eines Belebungsbeckens und eines Nachklärbeckens erfüllen.

Weiterhin wird die biologische Klärstufe gemäß einer erfindungsgemäßen Ausführungsform als diskontinuierliches biologisches System betrieben, das zugleich die Funktion einer mechanischen Reinigung ausüben kann. Die biologische Stufe und das Nachklärbecken werden hierbei zusammengefasst und sequentiell betrieben. Dabei wird der biologische Reaktor sequentiell einmal belüftet bzw. durchmischt und als biologisches System betrieben, und anschließend zur mechanischen Abtrennung der Mikroorganismen vom geklärten Abwasser durch Sedimentation verwendet.

Nach einer besonders bevorzugten erfindungsgemäßen Ausführungsform ist die biologische Klärstufe als Tropfkörper ausgestaltet. Dabei hat sich gezeigt, dass die Tropfkörper auch bei einer hohen Menge an erfindungsgemäß um das Vorklärbecken herumgeleitetem Abwasser nicht überlastet sind und eine vorteilhafte Führung der Teilströme in bzw. um das Vorklärbecken ermöglichen.

Die Rückführmenge des nitrifizierten Abwassers wird unter anderem durch die zulässige hydraulische Belastung der Anlage bestimmt. Die Rückführmenge kann mit einer regelbaren Pumpe und einem Steuerkreis so eingestellt werden, dass die Summe aus Zulaufmenge und Rückführmenge einen Sollwert ergibt.

Vorzugsweise beträgt die Rückführmenge des nitrifizierten Abwassers bei Trockenwetter mindestens etwa 10 %, vorzugsweise mindestens etwa 50 %, weiter bevorzugt mindestens etwa 100 % der Zulaufmenge; besonders bevorzugt wird eine Rückführmenge von etwa 150 bis 400 % der Zulaufmenge.

Die Menge der Biomasse bzw. des Biomasse enthaltenden Schlamms, z.B. des Überschussschlammes aus der biologischen Klärstufe und des Schlammgemischs aus dem Vorklärbecken wird vorzugsweise so eingestellt, dass der Schlammspiegel im Vorklärbecken mindestens 10 cm bis maximal 150 cm, besonders bevorzugt etwa 40 bis 100 cm beträgt - abhängig vom jeweiligen Vorklärsystem (Längsbecken oder Rundbecken) sowie der entsprechenden Ausführung (Beckentiefe und Hydraulik). Bei einem höheren Schlammspiegel kann ein Abtrieb des Schlammes erfolgen. Die Obergrenze bestimmt sich also durch den Schlammabtrieb aus der. Vorklärung.

Im Vorklärbecken liegt also ein Schlammgemisch enthaltend Primärschlamm (Rohschlamm) und Biomasse vor, die durch die Schlammzirkulation in der Vorklärung angereichert wird. So wird dieses Schlammgemisch oder ein Teil davon, aus der Vorklärung wieder zum Zulauf der Vorklärung gefahren (Rückführung c)), so dass ein Schlammkreislauf entsteht, über den das notwendige Schlammalter bzw. der notwendige Schlammspiegel für eine effiziente Denitrifikation gehalten werden kann. Damit findet eine Anreicherung von Denitrifikanten statt. Die erfolgreiche Denitrifikation kann leicht durch Messung des Stickstoffgehaltes des Abwassers überprüft werden.

Die Vorklärung hat also eine Doppelfunktion, und zwar eine mechanische Vorklärung und eine denitrifizierende biologische Reinigungsstufe.

Rückführung b) dient nach einer bevorzugten Ausführungsform als Biomasse, während das Rohabwasser und der Primärschlamm als Kohlenstoff-Donator für die Denitrifikanten im Vorklärbecken verwendet werden.

In der Regel wird eine vollständige Denitrifikation des zurückgeführten nitrathaltigen Wassers erreicht. Wird in der Vorklärstufe keine vollständige Denitrifikation erreicht, kann bei Belebungsanlagen durch eine sehr kleine vorgeschaltete Denitrifikationsstufe (Abtrennung von der biologischen Klärstufe) der Restnitratgehalt problemlos eliminiert werden.

Nach einer möglichen Ausführungsform wird das erfindungsgemäße Verfahren in der Weise durchgeführt, dass man das Gewichtsverhältnis zwischen Biomasse bzw. Schlamm (Rückführung b)) und Schlammgemisch aus dem Vorklärbecken auf etwa 90:10 bis 10:90, vorzugsweise auf etwa 30:70 bis 70:30, insbesondere auf etwa 50:50 einstellt.

Die Denitrifikation wird mit den sogenannten Denitrifikanten durchgeführt, die dem Fachmann geläufig sind. Darunter vesteht man im allgemeinen Mikroorganismen (Bakterien) deren Stoffwechsel unter den Denitrifikationsbedingungen (anoxisch) den Sauerstoff aus dem Nitratmolekül bzw. den verschiedenen Stickstoffverbindungen veratmen können. Für diesen Stoffwechsel ist ein ausreichendes Nahrungsangebot (Kohlenstoffquelle, abgekürzt C-Quelle) erforderlich.

Vorzugsweise wird die Denitrifikation bei pH-Werten im Bereich von etwa 6,0 bis 10, insbesondere von etwa 7 bis 8, durchgeführt. Bei einem geringen C/N-Verhältnis, d.h. bei einem Kohlenstoffmangel kann im Zulaufbereich der biologischen Klärstufe bei Belebungsanlagen ein unbelüfteter Bereich als weitere Denitrifizierungsstufe vorgesehen werden. Ferner kann dieses Verhältnis durch Zufuhr einer externen C-Quelle erhöht werden. Das C/N-Verhältnis sollte nicht kleiner als 2:1, vorzugsweise nicht kleiner als 5:1 sein. Das C/N-Verhältnis wird gemessen als BSB5, bezogen auf NO₃-Stickstoff, der auf N umgerechnet wird.

Das Schlammalter gemäß der EP 1 030 821 B1, Spalte 4, beträgt gewöhnlich mindestens 24 Stunden; es setzt sich zusammen aus dem Trockensubstanzgehalt und der Wachstumsrate der C-abbauenden Mikroorganismen.

Je nach Art des in der biologischen Klärstufe eingesetzten Systems kann das nitrifizierte Abwasser nach einer bevorzugten Ausführungsform vom Zulauf oder Ablauf der Nachklärung abgezogen und in die Vorklärung rückgeführt werden. Betreibt man die biologische Klärstufe (ein- oder zweistufig) mit Belebungsbecken (Belebtschlammverfahren), so wird das nitrifizierte (nitrathaltige Wasser) z.B. nach der mechanischen Trennung des Belebtschlammes vom nitrifizierten Abwasser im Ablauf der Nachklärung abgezogen. Wird ein Tropfkörpersystem als biologische Klärstufe (ein- oder zweistufig) verwendet, so kann nach einer bevorzugten Ausführungsform der Abzug des nitrifizierten Abwassers im Zulauf zum Nachklärbecken erfolgen oder aus dem Tropfkörperschacht. Bei Tropfkörpern fällt in der Regel eine geringere Schlammmenge an, so dass auch eine gleichzeitige (gemeinsame) Rückführung von nitrifiziertem Abwasser (Rückführung a)) und Biomasse (Überschußschlamm) aus der biologischen Klärstufe (Rückführung b)) an dieser Stelle möglich ist. Eine vorherige Sedimentation des Überschußschlammes im Nachklärbecken ist daher unter Umständen nicht erforderlich. Alternativ kann die Biomasse für die Rückführung b) jedoch z.B. auch nach Absetzen des Schlamms in der Nachklärung erfolgen.

Allgemein können die Rückführungen a) und b) (optional) und c) in getrennten Leitungen, oder, soweit anlagentechnisch möglich, zumindest teilweise in gemeinsamen Leitungen erfolgen. Nach einer bevorzugten Ausführungsform werden die Rückführungen a) und b) zumindest teilweise bzw. einen Teil der Strecke gemeinsam in der selben Leitung zum Vorklärbecken rückgeführt. Dadurch finden die Denitrifikanten bereits in der Leitung mit der rückgeführten Biomasse möglichst frühzeitig günstige Wachstumsbedingungen durch die in dem nitrifizierten Abwasser vorhandenen Stickstoffoxide (Nitrat, Nitrit etc.).

Ein weiterer Aspekt der vorliegenden Erfindung betrifft eine Kläranlage, insbesondere umfassend mindestens ein Vorklärbecken mit Zulauf, mindestens eine biologische Klärstufe und mindestens ein Nachklärbecken, wobei eine Leitung vorgesehen ist, über die ein Teil des Abwasserzulaufs vor dem Vorklärbecken abgezweigt und nach dem Vorklärbecken, jedoch vor der biologischen Klärstufe oder direkt in die biologische Klärstufe wieder zugeführt werden kann. Durch diese Umleitung kann, wie vorstehend ausgeführt, überraschend eine besonders effiziente und gleichmäßige Denitrifikation im Vorklärbecken, insbesondere bei dem üblicherweise in der Praxis ständig variierenden Abwasserzustrom, sichergestellt werden.

Neben der für die erfindungsgemäße Umleitung eines Teils des Abwasserzulaufs um das Vorklärbecken herum können alle üblichen, dem Fachmann geläufigen Leitungen zur Führung des Abwassers bzw. von entsprechenden Teilströmen und Schlammströmen vorgesehen sein, solange die hierin beschriebenen Rück- oder Einleitungen in das Vorklärbecken oder dessen Zulauf gewährleistet werden können.

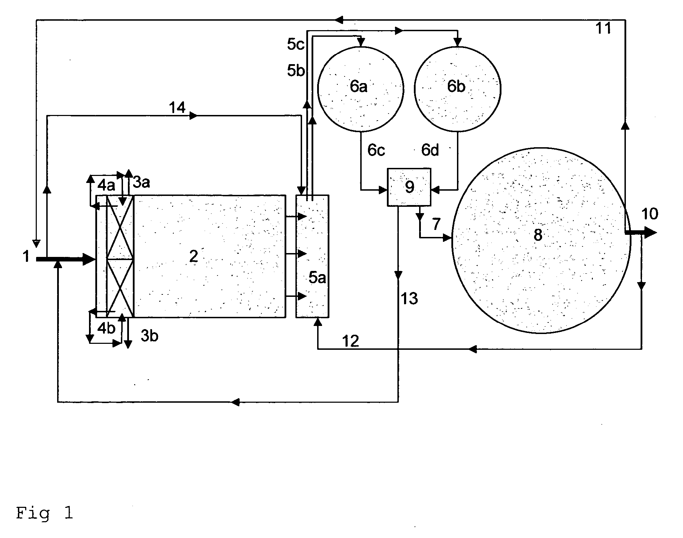

Die Erfindung wird nachstehend anhand der Zeichnung und eines nicht-beschränkenden Ausführungsbeispiels noch näher erläutert

Bei dem angegebenen Ausführungsbeispiel wird das Abwasser in einer Menge 1.700 m³/d und bis zum 3,6fachen über den Abwasserzulauf 1 in das Vorklärbecken 2 eingeleitet. Der Schlammspiegel beträgt 20 cm mit einer Trockenmassenkönzentration von im Mittel 1 %. In das Vorklärbecken 2 wird über die Leitungen 13 nitrifiziertes Abwasser aus dem Schacht Ablauf Tropfkörper 9 in einer Menge von 4.060 m³/d in das Vorklärbecken 2 zurückgeleitet; das Rücklaufverhältnis beträgt 238 %. Weiterhin wird durch die Leitung 11 Überschussschlamm (belebter Schlamm) aus dem Nachklärbecken 8 in einer Menge von 6,6 m³/d zurückgeleitet. Bei einem Zulauf vom dreifachen des Trockenwetterzulaufs wird die Rückführung des nitrathaltigen Wassers gestoppt. Aus jedem der beiden Schlammtrichter des Vorklärbeckens 2 wird über die Leitungen 4a und 4 b das Schlammgemisch aus der Vorklärung mit je 17 l/s rezirkuliert. Das entspricht in der Summe einer 3,3 - maligen internen Rezirkulation des Schlammgemisches im Vorklärbecken pro Tag bei einem Volumen des Vorklärbeckens von 880 m³. Das Vorklärbecken 2 wird unter anoxischen Bedingungen gefahren, wobei der Nitrat-Stickstoffgehalt des nitrifizierten Abwassers von 11 mg/Liter auf < 2 mg/Liter vermindert wird, bei einer N_{ges} - Konzentration im Zulauf von im Mittel 50 mg/L und Ammoniumkonzentrationen von im Mittel 35 mg/L. Der Räumer im Vorklärbecken läuft mit 3cm/sec mit Stillstandszeiten von 5 bis 10 min. Ein Teil des Schlammgemisches (75 m³/d) wird über die Leitungen 3a und 3b in den Voreindicker (nicht dargestellt) abgezogen und nach Sedimentation auf im Mittel 10 m³ mit einem Trockensubstanzgehalt von 7 bis 9 % in den Faulturm (nicht dargestellt) geleitet. Nach weiterer Bearbeitung (Faulung, Entwässerung) kann der Klärschlamm landwirtschaftlich oder thermisch genutzt werden.

Das weitgehend denitrifizierte Abwasser wird aus dem Ablaufschacht 5a am Ende des Vorklärbeckens über die Leitungen 5b und 5c auf die parallel beschickten Tropfkörper 6a und 6b geleitet. Die Beschickung der Tropfkörper kann sowohl nur über das Vorklärbecken als auch aus dem Ablauf des Nachklärbeckens über die Leitung 12 erfolgen, was bei erhöhten Ammoniumwerten sinnvoll ist. Auf den Tropfkörpern erfolgt die Nitrifikation bis auf < 1 mg/l Ammoniumstickstoff, wobei der Nitrat-Stickstoffgehalt von <2 mg/l auf im Mittel 11 mg/l erhöht wird. Über die Leitungen 6c und 6d fließt das Abwasser-Schlamm-Gemisch in den Sammelschacht 9 und von dort aus über die Leitung 7 in das Nachklärbecken 8, in welchem eine Trennung in Wasser- und Schlammanteile erfolgt. Der größere Teil (4.060m3/d) des nitrifizierten Abwassers wird aus dem Sammelschacht 9 über die Rückführleitung 13 in das Vorklärbecken geleitet. Ein kleiner Teil (1.700 m³/d, entspricht der Zulaufmenge) des nitrathaltigen Abwassers mit im Mittel 7,5 mg/l Nitrat-Stickstoff wird über die Leitung 10 in den Vorfluter abgeleitet. Über die Leitung 11 wird der Überschußschlamm aus dem Nachklärbecken mit 6,6 m³/d in den Zulauf zum Vorklärbecken geleitet

Weiterhin wird erfindungsgemäß ein Teil des Abwasserzulaufs 1 über die Leitung 14 um das Vorklärbecken herum direkt in den Zulauf zur biologischen Klärstufe, bzw. in den Ablaufschacht 5a des Vorklärbeckens geleitet. Vorzugsweise ab einem Wert von in diesem Fall dem 4fachen des Trockenwetterzulaufs erfolgt die Umleitung.

Bei einem Regenereignis, das den Abwasserzulauf auf etwa das Vierfache des Trockenwetterzulaufs erhöhte, wurde in einem ersten Versuch keine erfindungsgemäße Umleitung eines Teils des Abwasserzulaufs um das Vorklärbecken herum durchgeführt. Dabei stieg, gemessen 3 Tage nach dem Regenereignis, der Nitratstickstoffgehalt des Ablaufs Nachklärbecken auf 15 mg/l.

Bei einem weiteren Versuch wurde bei einem entsprechenden Regenereignis, bei dem der Abwasserzulauf auf etwa das Vierfache des Trockenwetterzulaufs erhöht war, der über diese Menge hinausgehende Anteil des Abwasserzulaufs über die erfindungsgemäße Leitung 14 um das Vorklärbecken herum geleitet. Dabei ergab sich 3 Tage nach dem Regenereignis ein erheblich geringerer Nitratstickstoffgehalt im Ablauf von 8 mg/l.

### Figurenlegende:

- 1: Zulauf
- 2: Vorklärbecken (VKB)
- 3a und 3b: Überschußschlamm (ÜSS)-Abzug je Schlammtrichter
- 4a und 4b: interne Schlammrezirkulation je Schlammtrichter
- 5a: Ablaufschacht aus dem VKB
- 5b und 5c: Beschickungsleitungen auf die Tropfkörper
- 6a und 6b: parallel beschickte Tropfkörper
- 6c und 6d: Ablauf der Tropfkörper
- 7: Ablauf aus dem Tropfkörperschacht
- 8: Nachklärbecken (NKB)
- 9: Schacht Ablauf Tropfkörper
- 10: Ablauf NKB
- 11: ÜSS -Abzug
- 12: Rückführung ammoniumhaltiges Wasser
- 13: Rückführung nitrifiziertes (= nitrathaltiges) Wasser
- 14: Umgehungsleitung des Vorklärbeckens

## Patentansprüche

1. Verfahren zur Denitrifikation von Abwässern in einer Kläranlage, umfassend mindestens ein Vorklärbecken mit Zulauf, mindestens eine biologische Klärstufe und mindestens ein Nachklärbecken, wobei
a) gegebenenfalls nitrifiziertes Abwasser
b) gegebenenfalls Biomasse oder Überschussschlamm aus der biologischen Klärstufe oder der Nachklärung
c) Schlammgemisch aus dem Vorklärbecken in das Vorklärbecken oder dessen Zulauf rückgeführt werden, und wobei ein Teil des Abwasserzulaufs vor dem Vorklärbecken abgezweigt und nach dem Vorklärbecken wieder zugeführt wird.

2. Verfahren nach Anspruch 1, wobei nur dann eine Teil des Abwasserzulaufs vor dem Vorklärbecken abgezweigt und nach dem Vorklärbecken wieder zugeführt wird, wenn der Abwasserzulauf den Trockenwetterzulauf übersteigt.

3. Verfahren nach Anspruch 1 oder 2, wobei zwischen 10 und 100 %, insbesondere 30 bis 100 % des über den Trockenwetterzulauf (Qt) hinausgehenden Abwasserzulaufs vor dem Vorklärbecken abgezweigt werden.

4. Verfahren nach einem der vorstehenden Ansprüche, wobei der vor dem Vorklärbecken abgezweigte Teil des Abwasserzulaufs direkt in die biologische Klärstufe, oder in deren Zulauf geleitet wird.

5. Verfahren nach einem der vorstehenden Ansprüche, wobei die biologische Klärstufe als Tropfkörper parallel oder hintereinander angeordnet ausgestaltet ist.

6. Verfahren nach einem der vorstehenden Ansprüche, wobei der dem Vorklärbecken zugeführte Teil des Abwasserzulaufs, d.h. der nicht vor dem Vorklärbecken abgezweigte Teil, bei dem 1-fachen, oder zwischen dem 1-fachen bis maximal dem 2-fachen des Trockenwetterzulaufs (Qₜ) liegt, und der darüber hinausgehende Teil eines erhöhten Abwasserzulaufes vor dem Vorklärbecken abgezweigt wird.

7. Verfahren nach einem der vorstehenden Ansprüche, **dadurch gekennzeichnet, dass** die Rückführmenge der nitrifizierten Abwässer mindestens etwa 50 %, vorzugsweise bis 400 % der Abwasserzulaufmenge beträgt.

8. Verfahren nach einem der vorstehenden Ansprüche, **dadurch gekennzeichnet, dass** man den Schlammspiegel im Vorklärbecken auf etwa 10 bis 120 cm, vorzugsweise etwa bei 20 bis 100 cm einstellt.

9. Verfahren nach einem der vorstehenden Ansprüche, **dadurch gekennzeichnet, dass,** sofern die Abwasserzulaufmenge über dem Trockenwetterzulauf (Qₜ) liegt, der den Trockenwetterzulauf übersteigende Anteil des Abwasserzulaufs komplett um das Vorklärbecken herum umgeleitet.

10. Verfahren nach einem der vorstehenden Ansprüche, **dadurch gekennzeichnet, dass,** sofern die Abwasserzulaufmenge über dem Trockenwetterzulauf (Qₜ) liegt, der den Trockenwetterzulauf übersteigende Anteil des Abwasserzulaufs nur teilweise um das Vorklärbecken umgeleitet, d. h. ein gewisser Anteil davon wird direkt in das Vorklärbecken eingeleitet.

11. Kläranlage, umfassend mindestens ein Vorklärbecken mit Zulauf, mindestens eine biologische Klärstufe und mindestens ein Nachklärbecken, wobei eine Leitung vorgesehen ist, über die ein Teil des Abwasserzulaufs vor dem Vorklärbecken abgezweigt und nach dem Vorklärbecken vor der biologischen Klärstufe oder direkt in die biologische Klärstufe wieder zugeführt werden kann.
